# EUROPEAN PATENT APPLICATION

(11) **EP 1 001 299 A1**
(43) Date of publication of application: **17.05.2000**
(21) Application number: 98402819.1
(22) Date of filing: 13.11.1998
(51) Int. Cl.: G02B 27/22

(54) **Stereoscopic display device**

(71) Applicant: THOMSON multimedia, 92100 Boulogne Billancourt (FR)
(72) Inventor: Chikazawa, Yoshiharu, 92100 Boulogne-Billancourt (FR)
(74) Representative: Ruellan-Lemonnier, Brigitte

(57) **Abstract**

The invention concerns a stereoscopic display device comprising a transmissive image reproducing element (10), two light sources (22, 24), optical means to direct the light emitted by one light source towards the right eye and to direct the light emitted by the other light source towards the left eye, and control means for displaying alternately an image for the right eye and an image for the left eye on the image reproducing element (10), and for activating the source emitting light for the right eye only when the image for the right eye is displayed and for activating the source emitting light for the left eye only when the displayed image is for the left eye.

According to the invention, the optical means (28) are of the converging type in order that the light provided by each light source (22, 24) converges towards the corresponding eye (30, 32).

As the energy provided by the light sources is efficiently used the device needs minimum power.

## Description

The invention relates to a stereoscopic display device comprising a transmissive image reproducing element with two light sources on the rear side of this element.

For reproducing stereoscopic TV images, it is known to provide on a display alternately an image for the left eye and an image for the right eye and to provide optical means directing the left image to the left eye and the right image to the right eye.

It has been more particularly proposed a LCD type stereoscopic display device wherein the picture elements (pixels) of the transmissive LCD are alternately activated in order to reproduce the image for the left eye and the image for the right eye. In this known device, two light sources and a lens are provided on the rear side of the (LCD) image reproducing element. These sources are located in the focal plane of the lens. The position of one source is such that the parallel beam that it produces on the front side of the LCD is directed towards the right eye and the other source is located in a position for which the parallel beam that it produces is directed towards the left eye. These sources are activated in synchronism with the corresponding images. In other words, the source which provides light directed towards the right eye is lit when the right image is activated on the LCD.

The invention is based on the recognition that, in the prior art, the light sources on the rear side of the image reproducing element must have a relatively high power in order that the eyes see a sufficiently bright image. This feature is hardly compatible with portable devices such as lap top computers or individual movie displays. In fact, the high energy consumption reduces the lifetime of the batteries and, moreover, efficient light sources are generally bulky and expensive.

In order to overcome this drawback, the invention provides a stereoscopic display device wherein optical means directing the light from the two light sources respectively to the left eye and to the right eye, are of the converging type. Preferably, the optical means make an image of the light source for the right image on the right eye and an image of the light source for the left image on the left eye.

As the light converges on each eye, the loss of energy is minimized and the power of the light sources can be minimized. This feature is quite favorable to individual portable devices.

The optical means comprise a lens in an embodiment of the invention.

In another embodiment of the invention, in order to reduce the volume of the device, instead of using a lens, use is made of a converging mirror. In this embodiment, the converging or focusing mirror is provided on the rear side of the image reproducing element and the two light sources are in positions such that the energy of the first light source converges on the right eye and the energy of the second light source converges on the left eye.

The converging mirror is for instance of the Fresnel type.

Other features and advantages of the invention will appear with the following description of some of its embodiments, this description being made in connection with the drawings in which:
figure 1 represents schematically a stereoscopic display according to the invention,
figures 2a and 2b show the operation of the device represented on figure 1,
figure 3 shows schematically another embodiment of the device according to the invention,
figure 4 represents a Fresnel mirror for the device of figure 3,
figure 5 is another representation of the device of figure 3, and
figure 6 shows another type of Fresnel mirror for the device of figure 3 or figure 5.

In the embodiments represented on the drawings, the stereoscopic display device comprises a liquid crystal display 10 having a multiplicity of pixels for which the transmissivity and the color is controlled in order to form the image. In order to display stereoscopic moving images, the period of one image (one frame) is divided into two fields wherein the first (or second) field produces the image for the right eye and the second (or first) field produces the image for the left eye.

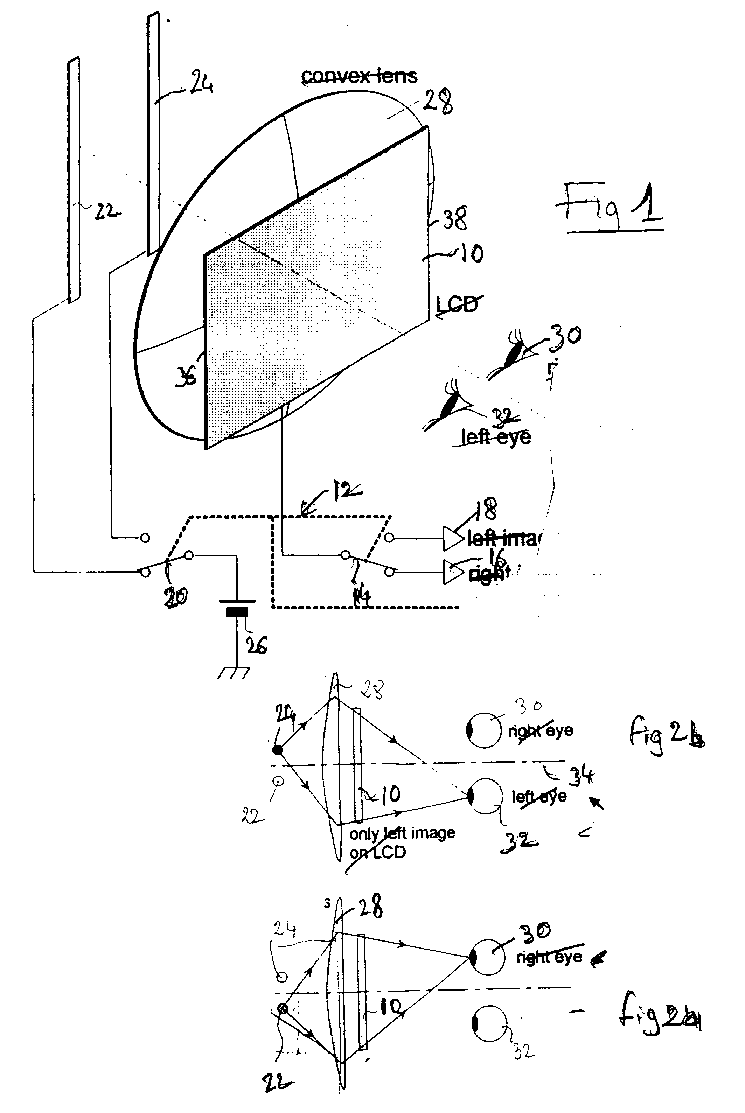

On figure 1, the control means have been represented by interrupted line 12 which controls the operation of two switches. A first switch 14 applies to LCD 10 alternately a signal 16 for forming the right image and a signal 18 for forming the left image. The second switch 20 is controlled in synchronism with switch 14, and provides alternately power to a first light source 22 producing light for the right eye and a second light source 24 providing light for the left eye. On figure 1, the power for these two light sources is schematically represented by a battery 26. Of course, this is only a schematic representation and it is clear that the nature of the power provided to the light sources 22 and 24 depends on the type of light source which is used.

These light sources 22 and 24 are installed behind LCD 10. Between these light sources 22 and 24 and the LCD 10, is provided a converging lens 28 which is close to LCD 10.

The positions of light sources 22 and 24 with respect to the lens 28 and LCD 10 is such that the lens 28 provides an image of light source 22 on the right eye 30 and this lens 28 provides also an image of light source 24 on the left eye 32.

The operation of the device appears clearly with the figures 2a and 2b.

During the first field (figure 2a), only the light source 22 is active and LCD 10 displays the image for the right eye. Due to the fact that lens 28 makes an image of light 22 on the right eye 30 and that lens 28 is close to LCD 10, most of the light energy provided by source 22 crosses LCD 10 and reaches the right eye 30.

During the second field, only light source 24 is active and LCD 10 displays only the left image. Most of the energy provided by light source 24 crosses LCD 10 and reaches the left eye 32.

In the embodiment shown on figures 1, 2a and 2b, the light sources 22 and 24 are positioned symmetrically with respect to the axis 34 of the device; each light source has an elongated shape. The sources 22 and 24 are parallel with each other, perpendicular to axis 34 and parallel to the small sides 36, 38 of the rectangular LCD 10. The length of these light sources 22 and 24 is of the same order of magnitude as the length of the small sides 36 and 38. Therefore, it is possible to uniformly illuminate LCD 10 in the vertical direction. It is also possible to provide, in front of the light sources 22 and 24, a diffuser (not shown) in order to improve the uniformity of the light in the direction of the long sides of the LCD 10. It is further possible to use a well-known optical integrator for distributing uniformly the light on the LCD 10.

Light sources having different shapes may also be used, more particularly punctual sources, i.e. sources having a small extension.

In order to reduce the volume occupied by the lens 28 and also to reduce its weight, in an embodiment, this lens 28 is of the Fresnel type.

Due to its design, the device of the invention is well suited for a display device which must be used individually, i.e. by a single user.

As the light provided by sources 22 and 24 is efficiently used, the sources may have small dimensions and a small weight. For the same reasons, power source 26 may have a small volume and a small weight, due to the optimization of the use of the energy.

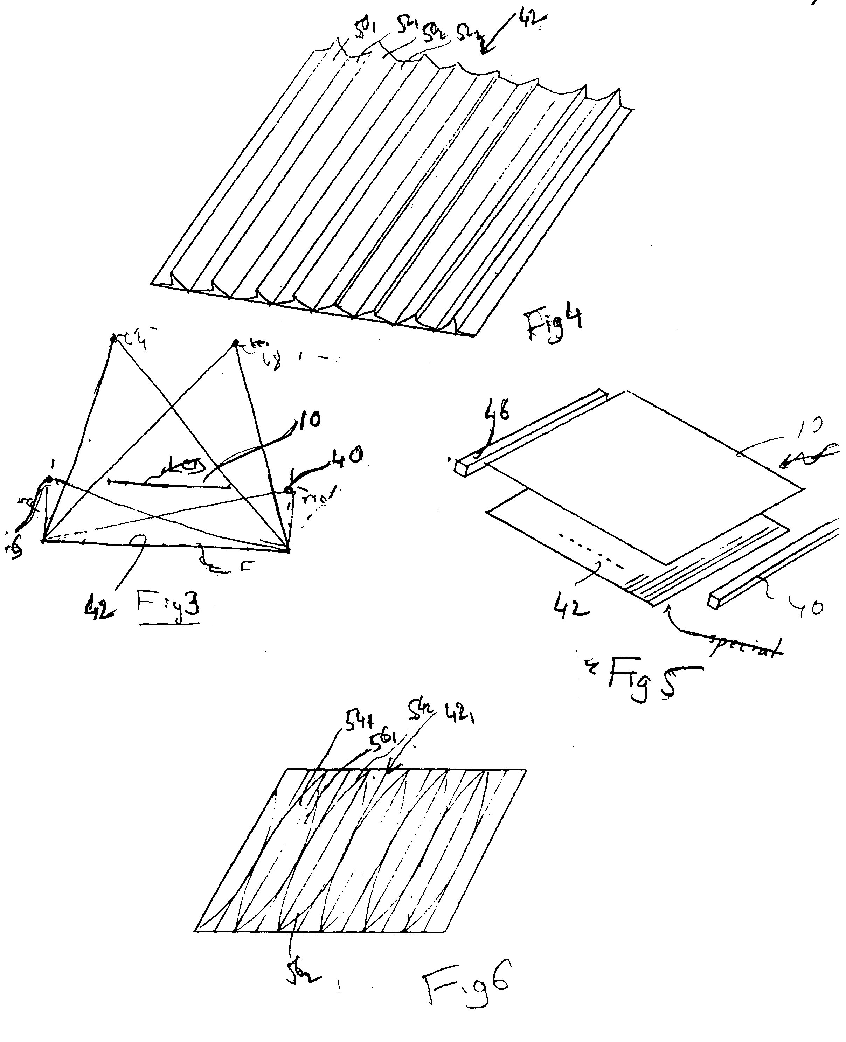

The embodiment represented on figure 3 to 6 is based on the same principle as the embodiment just described in relation with figures 1, 2a and 2b, but, instead of using a converging lens, it uses a converging mirror, preferably of the Fresnel type.

As shown on figure 3, the light source 40 is active when the LCD 10 displays the right image and the converging mirror 42 makes the image for this source 40 on the right eye 44. Similarly, the light source 46 is active only when LCD 10 displays the left image and the mirror 42 makes the image of this source 46 on the left eye 48.

The position of LCD 10 with respect to sources 40, 46 and with respect to the mirror 42 must be such that the light from sources 40 and 46 must cross this LCD 10 only after having been reflected by mirror 42.

The advantage of this embodiment, with respect to the embodiment shown on figure 1, is that it may be more compact, because the light sources 40 and 46 are on the same side of mirror 42 as LCD 10. On the contrary, in the embodiment of figure 1, the light sources 22 and 24, on one hand, and LCD 10, on the other hand, are on opposite sides of lens 28.

In the embodiments represented on figures 3 to 6, mirror 42, 42₁ is of the Fresnel type and the light sources 40 and 46 are elongated like the light sources in the embodiment represented on figure 1.

The Fresnel mirror 42 represented on figure 4 has alternate elongated stripes 50₁, 52₁, 50₂, 52₂, etc. The direction of elongation is the direction of elongated light sources 40 and 46. The elongated stripes 50₁, 50₂, 50₃ ... 50ᵢ ... form a first converging mirror and the second elongated stripes 52₁, 52₂ ... 52ᵢ ... form a second converging mirror. The first converging mirror is the one which makes the image of source 40 on the right eye 44 (figure 3) and the second mirror, with elongated elements 52_{i,} makes the image of light source 46 on the left eye 48.

In this example, the two Fresnel mirrors (stripes 50ᵢ and 52ᵢ) are of the cylindrical type.

In order to distribute the light energy of each source 40 and 46 on LCD 10, it is possible, like for the first embodiment, to use a diffuser and/or an optical integrator.

In the embodiment shown on figure 6, the Fresnel mirror 42₁ has also two types of alternated elongated stripes 54₁, 56₁, 54₂, 56₂, etc. which form converging mirrors for the right and the left eyes. But the shapes of these mirrors are such that they can be used in conjunction with light sources of the punctual type. For instance, the two mirrors define an ellipsoïdoparaboloïd of revolution.

In all the embodiments the light sources may be of any type, for instance light emitting diodes (LED). One or several diodes may be used to form a punctual light source and these light diodes may be also disposed along a line in order to form elongated light sources.

The transmissive image reproducing element 10 may be of any type, either black and white or colored.

## Claims

1. Stereoscopic display device comprising a transmissive image reproducing element (10), two light sources (22, 24; 40, 46), optical means to direct the light emitted by one light source towards the right eye and to direct the light emitted by the other light source towards the left eye, and control means for displaying alternately an image for the right eye and an image for the left eye on the image reproducing element (10), and for activating the source emitting light for the right eye only when the image for the right eye is displayed and for activating the source emitting light for the left eye only when the displayed image is for the left eye, characterized in that the optical means (28; 42, 42₁) are of the converging type in order that the light provided by each light source (22, 24 ; 40, 46) converges towards the corresponding eye (30, 32; 44, 48).

2. A stereoscopic display device according to claim 1, characterized in that the optical means (28, 42, 42₁) form an image of each light source on the corresponding eye.

3. A stereoscopic display device according to claim 1 or 2, characterized in that the image for the right eye is formed during one field of the frame and the image for the left eye is formed during the other field of the frame.

4. A stereoscopic display device according to any of the previous claims, characterized in that the optical means comprise a converging lens (28), for instance of the Fresnel type.

5. A stereoscopic display device according to any of claims 1 to 3, characterized in that the optical means comprise converging mirror means (42, 42₁).

6. A stereoscopic display device according to claim 5, characterized in that the converging mirror means are of the Fresnel type.

7. A stereoscopic display device according to claim 6, characterized in that the Fresnel converging mirror means (42, 42₁) comprise two types of reflecting elements, the first type (50ᵢ) being for the image for the right eye and the second type (52ᵢ) being for the image for the left eye.

8. A stereoscopic display device according to claim 7, characterized in that the mirror elements of the two types form an alternate succession.

9. A stereoscopic display device according to claim 7 or 8, characterized in that the mirror elements are elongated along the same direction.

10. A stereoscopic display device according to any of claims 5 to 9, characterized in that the converging mirror means are of the cylindrical type or of the ellipsoïdo-paraboloid type.

11. A stereoscopic display device according to any of the previous claims, characterized in that the light sources are elongated in the same direction.

12. A stereoscopic display device according to any of claims 1 to 10, characterized in that the light sources are of the punctual type.

13. A stereoscopic display device according to any of the previous claims, characterized in that the transmissive image reproducing element (10) comprises a liquid crystal display element.

14. A stereoscopic display device according to any of the previous claims, characterized in that the image reproducing element having a rectangular shape, the light sources (22, 24; 40, 46) are elongated in the direction of one side of this element.
